# EUROPÄISCHE PATENTSCHRIFT

(11) **EP 1 024 372 B1**
(45) Veröffentlichungstag und Bekanntmachung des Hinweises auf die Patenterteilung: **02.10.2002**
(21) Anmeldenummer: 00100975.2
(22) Anmeldetag: 19.01.2000
(51) Int. Cl.: G01S 11/14, B66B 1/34

(54) **Einrichtung zur Positionserfassung**
Device for position detection
Dispositif pour détecter la position

(30) Priorität: 29.01.1999 DE 19903643
(43) Veröffentlichungstag der Anmeldung: 02.08.2000
(73) Patentinhaber: K.A. SCHMERSAL GmbH & Co., D-42279 Wuppertal (DE)
(72) Erfinder: Türk, Stefan, Dr., 42117 Wuppertal (DE)
(74) Vertreter: Sparing - Röhl - Henseler Patentanwälte

(56) Entgegenhaltungen:
- EP-A- 0 694 792
- US-A- 4 233 588
- US-A- 4 389 631
- US-A- 4 494 224

## Beschreibung

Die Erfindung betrifft eine Einrichtung zur Positionserfassung eines längs einer vorgegebenen Strecke beweglichen Gegenstandes nach dem Oberbegriff des Anspruchs 1.

Aus EP-A-0 694 792 ist eine derartige Einrichtung zur Positionserfassung eines beweglichen Gegenstandes bekannt, die einen sich entlang eines Verfahrwegs erstreckenden Schallsignalleiter mit vorbestimmter, gleichmäßiger Schallausbreitungsgeschwindigkeit sowie einen mit einem Signalgeber verbundenen, an dem beweglichen Gegenstand befindlichen Signaleinkoppler zum Einkoppeln eines Schallsignals in den Schallsignalleiter aufweist. Hierbei sind an beiden Enden des Schallsignalleiters Signalauskoppler angeordnet, die jeweils mit einem Zähler verbunden sind, wobei die beiden Zähler über einen Taktgeber getaktet und mit einem Subtrahierer für die Ausgangssignale der beiden Zähler verbunden sind. Das Ausgangssignal des Subtrahierers ist als Maß für die Laufzeitdifferenz des eingekoppelten Schallsignals von der Einkopplungsstelle zu den Signalauskopplem von einer Auswerteeinheit zu einem Signal verarbeitbar, das für die momentane Position des beweglichen Gegenstandes auf dem Verfahrweg repräsentativ ist, wobei der Signaleinkoppler mit einer Signalabstandszeit arbeitet, die größer als die Schallaufzeit von einem Ende des Verfahrwegs zum anderen ist.

Mittels der Auswerteeinheit und eines in ihr implementierten Rechenalgorithmus wird den gemessenen Laufzeiten vom Schalleinkoppler zu den Signalauskopplern ein Positionswert zugeordnet. Speziell im Aufzugsbau wird die Auswerteeinheit kalibriert, indem dem Bündigkeitspunkt eines jeden Stockwerks das Ergebnis des Rechenalgorithmus in diesem Punkt zugeordnet sowie die Aufzugsposition mit diesem Zahlenwert assoziiert wird. Aufgrund von temperaturbedingten Gebäude- und/oder Schallsignalleiter-Längenänderungen oder durch Änderung der Schallgeschwindigkeit im Schallsignalleiter durch Temperatur- und Diffusionseffekte verschiebt sich aber die Zuordnung zwischen Bündigkeitspunkt und dem durch die Kalibrierung zugeordneten Zahlenwert.

Aufgabe der Erfindung ist es, eine Einrichtung zur Positionserfassung eines längs einer vorgegebenen Strecke beweglichen Gegenstandes nach dem Oberbegriff des Anspruchs 1 zu schaffen, mit der es möglich ist, einfach und genau vorbestimmte Positionen des beweglichen Gegenstandes auf einem Verfahrweg großer Länge anzufahren.

Diese Aufgabe wird entsprechend dem kennzeichnenden Teil des Anspruchs 1 gelöst.

Weitere Ausgestaltungen der Erfindung sind der nachfolgenden Beschreibung und den Unteransprüchen zu entnehmen.

Die Erfindung wird nachstehend anhand eines in den beigefügten Abbildungen schematisch dargestellten Ausführungsbeispiels näher erläutert.

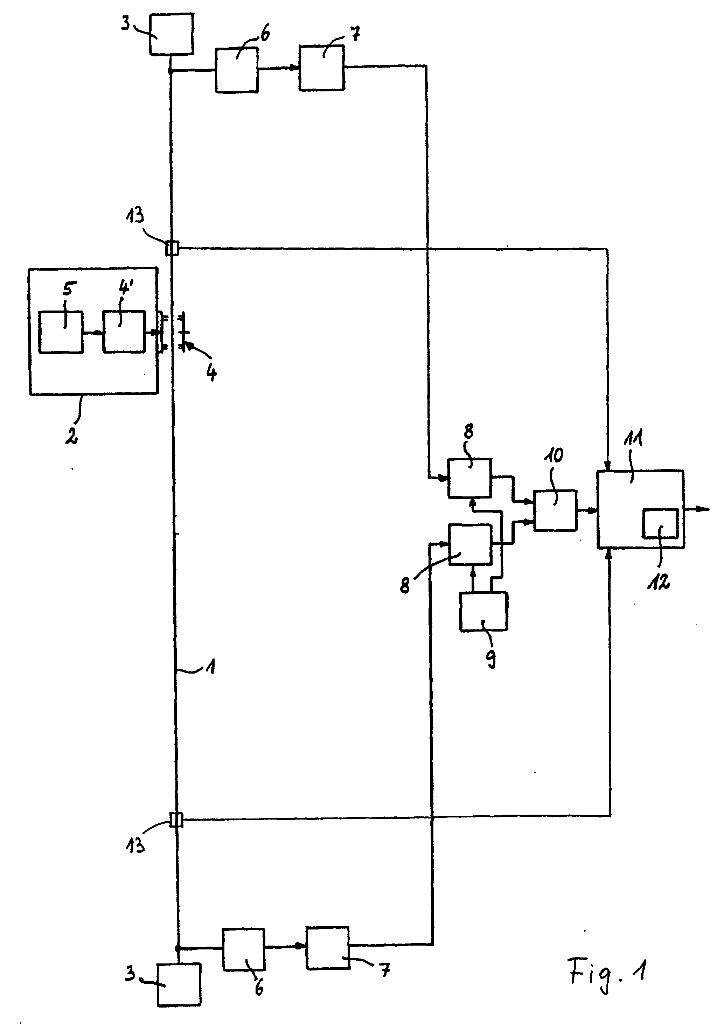

Fig. 1 zeigt schematisch eine Einrichtung zur Positionserfassung.
Fig. 2 zeigt ein Zeitschema bezüglich der Signale der Einrichtung von Fig. 1.

Die dargestellte Einrichtung zur Positionserfassung, die insbesondere zur Erfassung der Position eines Fahrstuhlkorbs verwendbar ist, umfaßt einen Schallsignalleiter 1, etwa eine Stahlschiene oder insbesondere einen Draht, der sich längs eines vorgegebenen Verfahrwegs erstreckt, längs dem ein beweglicher Gegenstand 2, etwa ein Fahrstuhlkorb, hin- und herbeweglich ist. Der Schallsignalleiter 1 mit vorbestimmter, gleichmäßiger Schallausbreitungsgeschwindigkeit ist an beiden Enden in einer dämpfenden Einspannung oder Halterung 3 gedämpft eingespannt bzw. gehalten.

Der bewegliche Gegenstand 2 trägt einen Signaleinkoppler 4, der mit einem Signalgeber 5, etwa einem Oszillator, über einen Signalanpassungskreis 4' verbunden ist. Der Signaleinkoppler 4, der insbesondere induktiv arbeitet, koppelt ein Schallsignal, das periodisch ein vom Signalgeber 5 empfangene Synchronisationsimpulse S umfaßt, in den Schallsignalleiter 1 ein. Die Synchronisationsimpulse S besitzen eine Taktzeit größer als die Laufdauer des Schallsignals von einem Ende des Schallsignalleiters 1 zu anderen.

Außerdem koppelt der Signaleinkoppler 4 Zusatzimpulse M ein, und zwar eine Vielzahl von Zusatzimpulsen M während jeder Taktzeit der Synchronisationsimpulse S. Die Taktzeit der Zusatzimpulse M ist derart, daß eine etwa zum Abbremsen und zum Anfahren einer genauen Position durch den Gegenstand 2 benötigte Distanzauflösung in Richtung des Verfahrwegs erreicht wird.

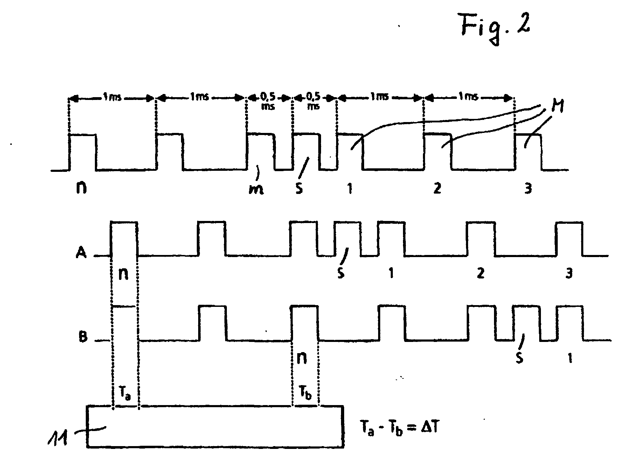

Die Synchronisationsimpulse S sind markiert, d.h. von den Zusatzimpulse M auswertemäßig unterscheidbar. Die Markierung kann beispielsweise dadurch erfolgen, daß ihre Taktzeit ein entsprechendes Vielfaches der Taktzeit der Zusatzimpulse M beträgt und sie bezüglich der Zusatzimpulse M zusätzlich, beispielsweise um eine halbe Taktzeit, zeitversetzt sind, vgl. die vom Signalgeber 5 erzeugte Impulsfolge der ersten Zeile von Fig. 2. Dann folgt einem Synchronisationsimpuls S jeweils eine vorbestimmte Anzahl von Zusatzimpulsen M.

Die Markierung kann aber auch in anderer Weise vorgenommen werden, so können sich die Synchronisationsimpulse S von den Zusatzimpulsen M durch Modulation, Impulsbreite, Impulshöhe od.dgl. unterscheiden.

Bei den einzukoppelnden Synchronisations- und Zusatzimpulsen S, M kann es sich um kurze elektromagnetische Impulse, etwa einfache Pulse oder um Pulsfolgen, oder um eine periodische Frequenzumtastung handeln.

An den Enden des Schallsignalleiters 1 ist jeweils ein Signalauskoppler 6 angeordnet. Hierbei handelt es sich vorzugsweise um einen piezoelektrischen Signalauskoppler 6, jedoch können auch induktiv oder kapazitiv arbeitende verwendet werden.

Jeder Signalauskoppler 6 ist mit einer Signalanpassungsschaltung 7 verbunden, deren Ausgangsleitungen jeweils zu einem Zähler 8 führen. Beide Zähler 8 werden von einem Taktgeber 9, einem Oszillator, getaktet. Die Taktzeit des Taktgebers 9 ist erheblich niedriger als die Laufzeit des Schalls von einem Ende des Schallsignalleiters 1 zum anderen und entsprechend der gewünschten Meßstreckenauflösung gewählt. Die Ausgänge der Zähler 8 werden einem Subtrahierer 10 zugeführt, der die Differenz der Ausgangssignale der Zähler 8 bildet und einer Auswerteeinheit 11, etwa einem Mikroprozessor, zuführt, wo das Ausgangsignal des Subtrahierers 10 ausgewertet wird.

Die Synchronisationsimpulse S dienen dazu, der Auswerteeinheit 11 anzuzeigen, welche nachfolgenden Zusatzimpulspaare zueinander gehören, nämlich die nach dem jeweiligen Synchronisationsimpuls S jeweils n-ten, d.h. ersten, zweiten, dritten usw. an den beiden Signalauskopplern 6 (in Fig. 2 mit A und B bezeichneten) zu unterschiedlichen Zeiten Tₐ und T_{b} einkommenden Zusatzimpulse M, damit die Auswerteeinheit 11 die zugehörige absolute Zeitdifferenz Tₐ - T_{b} = ΔT zwischen zusammengehörenden Zusatzimpulsen M und damit die Position des Gegenstandes 2 erfassen bzw. bestimmen kann.

Die Auswertung zur Positionserfassung erfolgt primär in bezug auf die Zusatzsignale M, allerdings können auch die Synchronisationsimpulse S diesbezüglich ausgewertet werden, und zwar vor allem, aber nicht nur dann, wenn der jeweils m-te Zusatzimpulse besonders markiert ist, um so als Synchronisationsimpuls S zu dienen.

Befindet sich der bewegliche Gegenstand 2 in der Mitte zwischen den Signalauskopplern 6, sind die Ausgänge der Zähler 8 gleich und ihre Differenz null. Befindet sich der Gegenstand 2 (bei vertikaler Strecke) oberhalb der Mitte, ist der Ausgang des an den oberen Signalauskoppler 6 angeschlossenen Zählers 8 kleiner als die des anderen. Aus der vom Subtrahierer 10 ermittelten Laufzeitdifferenz der zueinander gehörenden Zusatzimpulse M im Schallsignalleiter 1 und der bekannten Schallgeschwindigkeit in diesem ergibt sich die Entfernung des beweglichen Gegenstandes 2 von der Mitte. Da dann, wenn sich der bewegliche Gegenstand 2 unterhalb der Mitte befinden würde, die Differenz ein anderes Vorzeichen haben würde, ist auch bekannt, ob sich der beweglichen Gegenstand 2 oberhalb oder unterhalb der Mitte befindet, d.h. damit ist die genaue Lage des beweglichen Gegenstandes 2 errechenbar. Ein so von der Auswerteeinheit 11 erzeugbares, digitales oder analoges Positionssignal kann zur Nachfolgesteuerung verwendet werden.

Ein Watchdog 12 (Überwachungsschaltung) der Auswerteeinheit 11 kann zur einfachen Überwachung der Meßstrecke bei einer zeitkonstanten Einkopplung des Einkoppelsignals verwendet werden. Bei einer Verschmutzung, die in der Lage ist, das Signal auf dem Schallsignalleiter 1 zu bedämpfen, überschreitet die vom Subtrahierer 10 festgestellte Differenz einen vorbestimmten Wert, auf die der Watchdog 12 anspricht, um ein entsprechendes Warnsignal od.dgl. auszulösen.

Zum Nachkalibrieren sind an mindestens zwei Stellen längs des Schallsignalleiters 1 Sensoren 13 angebracht, die auf ein Überfahren durch den beweglichen Gegenstand 2 ansprechen, beispielsweise durch den vorbeifahrenden Gegenstand 2 betätigbare Schalter darstellen und ferner mit der Auswerteeinheit 11 verknüpft sind, so daß dieser beim Überfahren ein entsprechender Puls zugeführt wird.

Die Sensoren 13 sind vorzugsweise in Paaren (wenigstens einem Paar, was insbesondere auch von der Länge des Schallsignalleiters 1 abhängt) in jeweils gleichem Abstand zur Mitte des Schallsignalleiters 1 angeordnet.

Bei Kalibrieren der Auswerteeinheit entsprechend den Kalibrierpunkten, etwa den Bündigkeitspunkten eines jeden Stockwerks, werden auch die beiden Sensoren 13 kalibriert, d.h. daß diesen ein entsprechender Zahlenwert zugeordnet wird.

Fehler, wie sie durch Höhenänderung eines Gebäudes oder durch Änderung der Schallgeschwindigkeit im Schallsignalleiter 1 durch Temperaturund/oder Diffusionseffekte auftreten, wirken sich auch entsprechend auf Kalibrierpunkte der Sensoren 13 aus und werden dort erkannt, da durch die Pulse die Absolutposition stets bekannt ist und sich dementsprechend aus der Differenz zwischen der vorhandenen Kalibrierung und der Messung zum Zeitpunkt des Auftretens des Pulses der Fehler an dieser Stelle des Verfahrwegs, an der sich der jeweilige Sensor 13 befindet, ergibt. Mit Hilfe der so bekannten Fehler an mindestens zwei Stellen kann zumindest eine Gerade bestimmt werden, entsprechend der die Kalibrierpunkte durch die Auswerteeinheit 11 nachkalibriert werden.

Bei nicht allzu großer Länge des Schallsignalleiters 1 genügen zwei Sensoren 13, da die auftretenden Fehler in erster Näherung eine lineare Abhängigkeit zur Entfernung von einem Bezugspunkt besitzen. Bei größeren Längen sind jedoch mehr als zwei Sensoren 13 zweckmäßig, deren Fehlerabweichungen verwendet werden, um die Koeffizienten eines Polynoms vorbestimmten Grades zu bestimmen, entsprechend dem dann die Nachkalibrierung der Kalibrierungspunkte, einschließlich der durch die Sensoren 13 gebildeten, vorgenommen wird.

Durch diese fortlaufend erfolgende Nachkalibrierung werden die Fehler infolge Änderung der Schallgeschwindigkeit im Schallsignalleiter 1 an der realen Länge der Meßstrecke kompensiert. Dies ermöglicht die Verwendung eines einfachen Schallsignalleiters 1 in Form eines Drahtes.

Die Schallgeschwindigkeit in einem Schallsignalleiter 1 aus Stahl liegt bei etwa 5300 m/s. Bei einer zeitlichen Auflösung von 188 ns, wozu eine Taktgeberfrequenz von 5,3 MHz notwendig ist, liegt die Ortsauflösung der Meßstrecke bei 1 mm.

Obwohl bei dem vorstehenden Ausführungsbeispiel von wenigstens zwei Sensoren 13 ausgegangen wurde, die in vorbestimmten Abständen längs des Schallsignalleiters 1 angeordnet sind, ist es auch möglich, die Nachkalibrierung mit nur einem Sensor 13 auszuführen, da in der Mitte des Schallsignalleiters 1 der Fehler mit Null angenommen werden kann. In diesem Fall werden die beiden Punkte der Fehlergeraden durch die Mitte des Schallsignalleiters 1 und den Sensor 13 bestimmt. - Gegebenenfalls kann auch zusätzlich und unabhängig von der sonstigen Anzahl der Sensoren 13 ein Sensor 13 in der Mitte des Schallsignalleiters 1 angeordnet sein.

Anstelle von zwei Signalauskopplern 6 ist es auch möglich, nur einen Signalauskoppler benachbart zu einem Ende des Schallsignalleiters 1 vorzusehen.

Anstelle den Signaleinkoppler 4 mit dem Signalgenerator 5 zu koppeln, kann ersterer auch durch die Auswerteeinheit 11 getriggert werden, um die Schallsignale in den Schallsignalleiter 1 einzukoppeln. Stattdessen ist es aber auch möglich, daß der Signaleinkoppler 4 die Auswerteeinheit 11 über ein elektrisches Signal triggert, um den zeitlichen Beginn des Einkopplens eines Schallsignals in den Schallsignalleiter 1 zur Auswertung durch die Auswerteeinheit 11 zu definieren.

## Patentansprüche

1. Einrichtung zur Positionserfassung eines längs eines vorgegebenen Verfahrwegs beweglichen Gegenstandes (2), mit einem sich entlang des Verfahrwegs erstreckenden Schallsignalleiter (1) mit vorbestimmter, gleichmäßiger Schallausbreitungsgeschwindigkeit sowie mit einem mit einem Signalgeber (5) verbundenen, an dem beweglichen Gegenstand (2) befindlichen Signaleinkoppler (4) zum Einkoppeln eines getakteten Schallsignals in den Schallsignalleiter (1), wobei an mindestens einem Ende des Schallsignalleiters (1) ein Signalauskoppler (6) angeordnet ist, der mit einer Auswerteeinheit (11) zur Erzeugung eines für die momentane Position des beweglichen Gegenstandes (2) auf dem Verfahrweg repräsentativen Signals verbunden ist, **dadurch gekennzeichnet, daß** in einem vorbestimmten Abstand von der Mitte des Schallsignalleiters (1) wenigstens ein Sensor (13), der durch das Überfahren des beweglichen Gegenstandes (2) betätigbar ist, angeordnet und mit der Auswerteeinheit (11) gekoppelt ist, die entsprechend einem Fehlerpolynom, dessen Koeffizienten aus Fehlem abgeleitet werden, Kalibrierpunkte entlang des Verfahrwegs fehlerkompensiert, wobei sich der jeweilige, einer bestimmten Strecke des Verfahrwegs zugeordnete Fehler durch Auswertung des von dem der Strecke zugeordneten Sensor (13) beim Überfahren durch den beweglichen Gegenstand (2) abgegebenen Pulses ergibt.

2. Einrichtung nach Anspruch 1, **dadurch gekennzeichnet, daß** das Fehlerpolynom eine Gerade ist.

3. Einrichtung nach Anspruch 1, **dadurch gekennzeichnet, daß** das Fehlerpolynom eine Polynom höherer Ordnung ist

4. Einrichtung nach einem der Ansprüche 1 bis 3, **dadurch gekennzeichnet, daß** wenigstens zwei Sensoren (13), die vorzugsweise paarweise symmetrisch zur Mitte des Schallsignalleiters (1) angeordnet sind, vorgesehen sind.

5. Einrichtung nach einem der Ansprüche 1 bis 4, **dadurch gekennzeichnet, daß** der Schallsignalleiter (1) ein Draht ist.

6. Einrichtung nach einem der Ansprüche 1 bis 5, **dadurch gekennzeichnet, daß** zwei Signalauskoppler (6) jeweils mit einem nachgeschalteten Zähler (8) vorgesehen sind, wobei die beiden Zähler (8) über einen Taktgeber (9) getaktet und mit einem Subtrahierer (10) für die Ausgangssignale der beiden Zähler (8) verbunden sind.

7. Einrichtung nach Anspruch 6, **dadurch gekennzeichnet, daß** der Taktgeber (9) für die Zähler (8) mit einem für eine vorgesehene Meßstreckenauflösung notwendigen Mindestfrequenz arbeitet.

8. Einrichtung nach einem der Ansprüche 1 bis 7, **dadurch gekennzeichnet, daß** die Signalauskoppler (6) kapazitive, induktive oder insbesondere piezoelektrische Auskoppler sind.

9. Einrichtung nach einem der Ansprüche 6 bis 8, **dadurch gekennzeichnet, daß** die Auswerteeinheit (11) eine Überwachungsschaltung (12) umfaßt, die ein Warnsignal auslöst, wenn die vom Subtrahierer (10) festgestellte Differenz einen vorbestimmten Wert überschreitet.

10. Einrichtung nach einem der Ansprüche 1 bis 9, **dadurch gekennzeichnet, daß** der bewegliche Gegenstand (2) ein Aufzugkorb ist.

11. Einrichtung nach einem der Ansprüche 1 bis 10, **dadurch gekennzeichnet, daß** an jedem Ende des Schallsignalleiters (1) ein Signalauskoppler (6) angeordnet ist, die mit der Auswerteeinheit (11) gekoppelt sind.

## Claims

1. Device for detecting the position of an object (2) movable along a specific traversing path, with an acoustic signal line (1) with a specific uniform sound propagation velocity, extending along the traversing path, and a signal coupler (4) connected to a signal transmitter *(*5*)* located at the moving object (2), for coupling an acoustic signal to the acoustic signal line (1), whereby a signal output coupler (6), connected to an evaluation unit (11) for generating a signal representative of the actual position of the moving object (2) on the traversing path, is arranged at least at one end of the acoustic signal line, **characterised in that** at least one sensor (13) capable of being actuated by the movable object (2) passing over it is arranged at a specific distance from the centre of the acoustic signal line (1), and is coupled to the evaluation unit (11) aberration-compensating calibrating points along the traversing path according to a polynomial error function, the coefficients of which are derived from errors, whereby the respective error associated with a specific section of the traversing path results from evaluating the impulse from the sensor (13) associated with the section emitted when it. is passed over by the moving object (2).

2. Device according to claim 1, **characterised in that** the polynomial error function is a straight line.

3. Device according to claim 1, **characterised in that** the polynomial error function is a polynomial function of a higher order.

4. Device according to one of the claims 1 to 3, **characterised in that** the system has at least two sensors (13) which are preferably arranged in pairs, symmetrically to the centre of the acoustic signal line (1).

5. Device according to one of the claims 1 to 4, **characterised in that** the acoustic signal line (1) is a wire.

6. Device according to one of the claims 1 to 5, **characterised in that** two signal output couplers (6) are each provided with a counter (8) downstream, the two counters (8) being timed by a timing pulse generator (9) and connected to a subtracting unit (10) for the output signals of the two counters (8).

7. Device according to claim 6, **characterised in that** the timing pulse generator (9) for the counters (8) operates at a minimum frequency required for an envisaged resolution over the measuring section.

8. Device according to one of the claims 1 to 7, **characterised in that** the signal output couplers (6) are capacitive, inductive or in particular piezoelectric output couplers.

9. Device according to one of the claims 6 to 8, **characterised in that** the evaluation unit (11) comprises a monitoring circuit (12) which releases a warning signal when the differential determined by the subtracting unit (10) exceeds a predetermined value.

10. Device according to one of the claims 1 to 9, **characterised in that** the moving object (2) is a lift bucket.

11. Device according to one of the claims 1 to 10, **characterised in that** a signal output coupler (6) coupled to an evaluation unit (11) is arranged at each end of the acoustic signal line (1).

## Revendications

1. Dispositif pour la détection de la position d'un objet (2) mobile le long d'une voie de circulation prédéterminée, comprenant un conducteur de signaux sonores (1) qui s'étend le long de la voie de circulation et qui présente une vitesse de propagation des sons prédéterminée, constante, ainsi qu'un injecteur de signaux (4) relié à un émetteur de signaux (5) qui se trouve sur l'objet mobile (2), et est destiné à injecter un signal sonore rythmé dans le conducteur de signaux sonores (1), cependant qu'à au moins une extrémité du conducteur de signaux sonores (1), est disposé un extracteur de signaux (6) qui est relié à une unité d'analyse (11) destinée à produire un signal représentatif de la position momentanée de l'objet mobile (2) sur la voie de circulation, **caractérisé en ce qu'**au moins un capteur (13) qui peut être actionné par le passage de l'objet mobile (2) est disposé à une distance prédéterminée du milieu du conducteur de signaux sonores (1) et accouplé l'unité d'analyse (11), laquelle compense des points d'étalonnage sur la longueur de la voie de circulation pour l'élimination des erreurs en appliquant un polynôme d'erreur dont les coefficients sont dérivés d'erreurs, l'erreur liée à un trajet déterminé de la voie de circulation étant obtenue par analyse de l'impulsion émise par le capteur (13) associé au trajet lors du passage de l'objet mobile (2).

2. Dispositif selon la revendication 1, **caractérisé en ce que** le polynôme d'erreur est une droite.

3. Dispositif selon la revendication 1, **caractérisé en ce que** le polynôme d'erreur est un polynôme d'ordre plus élevé.

4. Dispositif selon l'une des revendications 1 à 3, **caractérisé en ce qu'**il est prévu au moins deux capteurs (13) qui sont de préférence disposés par paires symétriquement par rapport au milieu du conducteur de signaux sonores (1)

5. Dispositif selon l'une des revendications 1 à 4, **caractérisé en ce que** le conducteur de signaux sonores (1) est un fil métallique.

6. Dispositif selon l'une des revendications 1 à 5, **caractérisé en ce qu'**il est
prévu deux extracteurs de signaux (6), munis chacun d'un compteur (8) placé en aval, les deux compteurs (8) étant rythmés au-moyen d'un-rythmeur (9) et étant relié à un soustracteur (10) agissant sur les signaux de sortie des deux compteurs (8).

7. Dispositif selon la revendication 6, **caractérisé en ce que** le rythmeur (9) prévu pour les compteurs (8) travaille avec une fréquence minimale nécessaire pour assurer une résolution prévue du trajet de mesure.

8. Dispositif selon l'une des revendications 1 à 7, **caractérisé en ce que** les extracteurs de signaux (6) sont des extracteurs capacitifs, inductifs ou, en particulier, piézoélectriques.

9. Dispositif selon l'une des revendications 6 à 8, **caractérisé en ce que** l'unité d'analyse (11) comprend un circuit de surveillance (12) qui déclenche un signal avertisseur lorsque la différence constatée par le soustracteur (10) devient supérieure à une valeur prédéterminée.

10. Dispositif selon l'une des revendications 1 à 9, **caractérisé en ce que** l'objet mobile (2) est une cabine d'ascenseur.

11. Dispositif selon l'une des revendications 1 à 10, **caractérisé en ce qu'**à chaque extrémité du conducteur de signaux sonores (1) est associé un extracteur de signaux (6), les extracteurs de signaux étant couplés à l'unité d'analyse (11).
